# EUROPEAN PATENT APPLICATION

(11) **EP 1 985 905 A1**
(43) Date of publication of application: **29.10.2008**
(21) Application number: 07008623.6
(22) Date of filing: 27.04.2007
(51) Int. Cl.: F16L 25/01, F16L 33/24, F16L 39/02

(54) **Terminal unit for flexible hose to convey a fluid to a spray head**

(71) Applicant: Nobili, Fabrizio, 6534 San Vittore (CH)
(72) Inventor: Nobili, Fabrizio, 6534 San Vittore (CH)
(74) Representative: Zardi, Marco

(57) **Abstract**

Terminal unit (1) for at least one flexible hose (2) having a predetermined external diameter for fluid conveyance to a spray head. The terminal unit (1) comprises a body (3) having at least one seat (4) for the embedded insertion of a terminal portion (2a) of the hose (2), the seat (4) having an internal diameter substantially equal to the external diameter of the hose (2), and at least one sleeve (5) which can be inserted into said terminal portion (2a) of the hose (2), with predetermined pressure, so to press the hose (2) against the body (3) from the interior.

## Description

### Field of application

The present invention relates to a terminal unit for at least one flexible hose having a predetermined external diameter for conveying a fluid to a spray head.

### Prior Art

Those skilled in the art are familiar with terminal units for flexible hosing to convey fluid to a spray head for kitchen sinks, showers, bathtubs, and similar appliances, that connect one end of the hose to the spray head. The other end of the hose is connected to a mixer unit, for mixing cold and hot water, and installed on the wall under the kitchen sink, for example.

In particular, the terminal unit comprises a pipe union on which a terminal portion of the flexible hose is fitted, and held in position on the pipe union by means of a metal strip fastener or some similar fixing element.

More in particular, the terminal unit with the relative pipe union, the flexible hose and the metal fastener strip are enclosed in a flexible external sheath having a predetermined and conventional diameter, purely for the sake of appearance and to act as a connection for the spray head.

One drawback of said terminal units is characterised in that although it is easier to handle and is more pleasing in appearance, the use of an external sheath with a small section limits the flow rate of the flexible hose, while although it provides a larger flow rate, the use of an external sheath with an increased section is difficult to manage and is not particularly pleasant in appearance.

This drawback is even more obvious in the case of terminal units for spray heads conceived to distribute water in different modes, such as with a central single jet or peripheral rain spray and jet mode.

The distribution mode is generally regulated by means of a valve in the spray head to deviate the flow to a first distribution chamber in communication for water conveyance to peripheral nozzles for rain spray, or to a second distribution chamber in communication with a central nozzle for a single jet flow.

However, said spray heads are complex and expensive to produce because they involve inserting the flow deviation valve into the head of the spray head.

In order to reduce the production complexity of these spray heads, it is also common use to regulate the distribution mode by connecting the spray head water supply to two separate flexible hoses which deliver into a respective distribution chamber of the spray head, and selectively cutting off the flow in one of the two flexible hoses.

In this case the terminal unit connects the first hose to a distribution chamber of the spray head mounted with peripheral nozzles for rain spray action, and the second hose to a distribution chamber with the central nozzle for single jet action. A switchover action from one distribution mode to the other is performed by cutting off the fluid conveyance in either the first or second hose, without any valve in the spray head, and therefore in this way reducing the complexity of spray head production considerably.

However, said terminal units suffer from a considerable drawback due to the fact that the diameter of the flexible hoses must be reduced even further in order to be enclosed in the external sheath, together with the relative metal strip fastener and the pipe union to which they are fixed.

Furthermore, in said spray heads the switchover from one distribution mode can be performed by means of electric command signals activated on a push button system on the spray head and sent to a control unit to activate a flow cut-off electrovalve in the respective hose.

The push-button system is electrically connected to the control unit of the mixer unit, and can be installed on the mixer itself, for example.

Therefore, the diameter of the flexible hoses must be reduced even further because the terminal unit and the external sheath must contain the electrical connections between the control unit and the spray head.

In other words, reducing the section of the hoses to limit the space they occupy in the terminal unit and in the external sheath to permit separate fluid conveyance for respective distribution modes, signifies further reduction in the flow rate conveyed by each single flexible hose, limiting the fluid distribution both in the central jet and in the peripheral spray.

The technical problem to be resolved by the present invention is to provide a terminal unit of at least one flexible hose having structural characteristics able to overcome the aforesaid disadvantages.

### Summary of the invention

The solution proposed by the present invention is to provide a terminal unit on at least one flexible hose for fluid conveyance, comprising a strip fastener or a similar fixing element able to attach the hose to the pipe union from the inside of the hose towards the exterior, and avoiding occupying space in the external sheath.

According to such idea of solution, the technical problem is resolved by a terminal unit for at least one flexible hose having a predetermined external diameter, and used to convey fluid to a spray head, characterised in that it comprises a body having at least one seat for the embedded insertion of a terminal part of the hose, said seat having an internal diameter substantially equal to the external diameter of the hose, and at least one sleeve that can be inserted into said terminal portion of the hose, with predetermined pressure, so to press the hose against the body from the interior.

The characteristics and advantages of the terminal unit according to the present invention will be made apparent from the claims and the description provided further on, of an embodiment provided as a nonlimiting example, with reference to the appended drawings.

### Brief description of the drawings

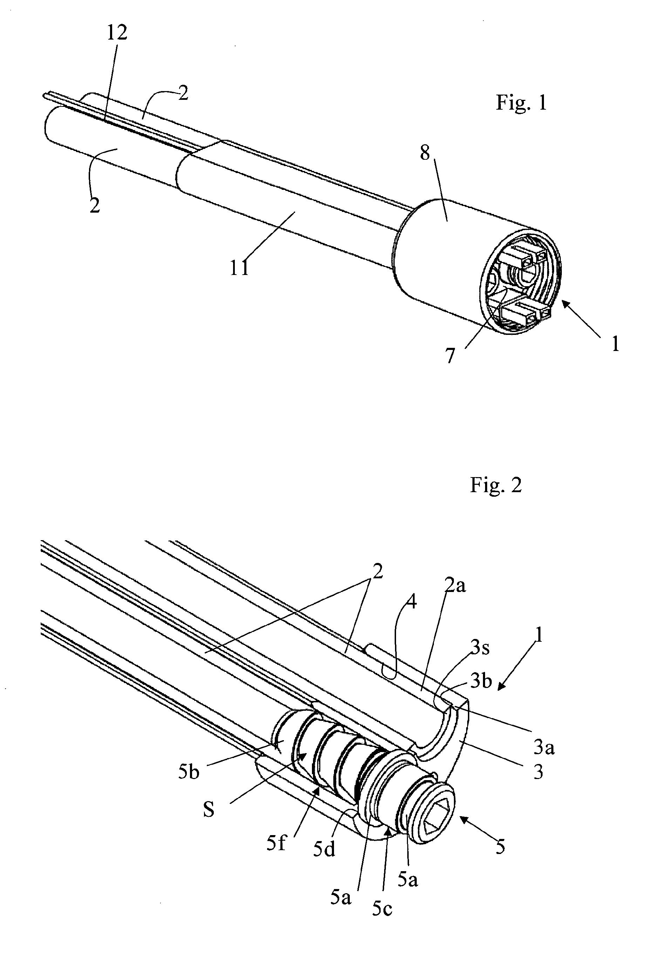

- Figure 1 shows a perspective view of a terminal unit according to the present invention;
- Figure 2 shows a perspective view in cross section of the terminal unit shown in figure 1;

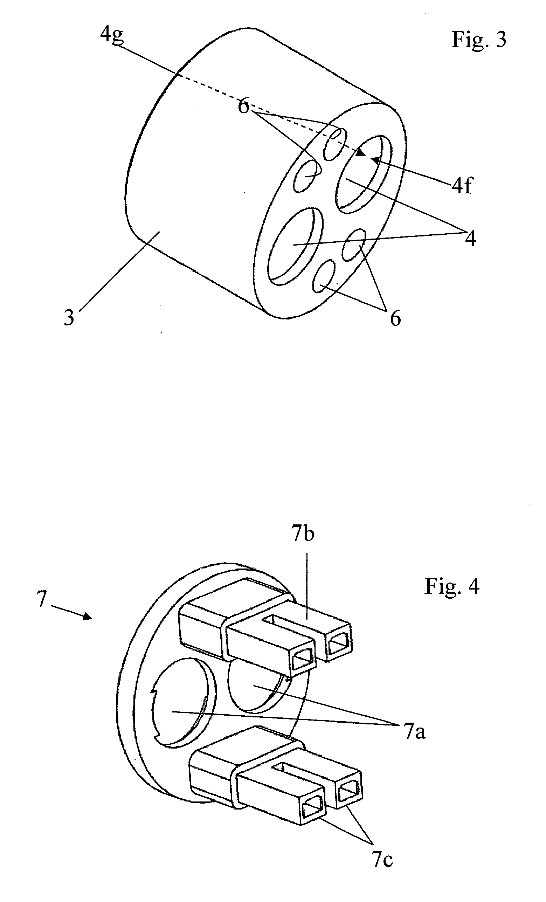

- Figure 3 shows a perspective view of a body of the terminal unit shown in figure 1;
- Figure 4 shows a perspective view of a support for the terminal unit shown in figure 1;

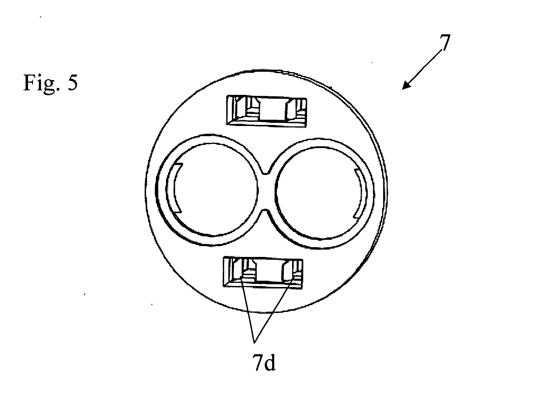

- Figure 5 shows a perspective view of the support shown in figure 4.

### Detailed description of a preferred embodiment

In reference to the appended figures, schematically illustrated, and identified with numeral 1 reference, is a terminal unit according to the present invention for connection to one end of a flexible hose 2 having a predetermined external diameter, for fluid conveyance to a spray head. The other end of the hose is connected to a mixer unit for mixing hot and cold water, which can be installed on the wall under the kitchen sink, for example.

The terminal unit 1 comprises a body 3 on the end of which is mounted a flexible external sheath 11 having a predetermined diameter, to enclose the flexible hose 2 and the body 3, purely for the sake of appearance and for connection to the spray head, not shown in the drawings because conventional.

According to the present invention, the body 3 comprises at least one housing seat 4 having an internal diameter substantially equal to the external diameter of the hose 2, to house the insertion of the terminal portion 2a of the hose 2.

In particular, the terminal unit 1 comprises a sleeve 5 which can be inserted into the terminal portion 2a of the hose 2, intended to engage the terminal portion 2a of the hose 2 with predetermined pressure, so to press against body 3 from inside the tube 2.

The sleeve 5 is equipped with external threading 5f having a predetermined pitch and profile, destined to be screwed to the terminal portion 2a of the hose 2, and with a tip portion 5b having a reduced section for easier insertion of the sleeve 5 into the terminal portion 2a of the flexible hose 2. In particular, the profile of sleeve 5 has a saw-tooth configuration, with the face side directed towards the tip portion.

In this manner, when the sleeve 5 is screwed into the hose 2, it compresses the hose 2 from the interior towards the body 3, thus blocking the saw-tooth profile in the thickness of the hose 2.

The body 3 comprises an annular ridge 3a formed in the seat 4 to provide an abutment for the head 3b against the terminal portion 2a of the hose 2 and against a flange 5a of the sleeve 5.

In particular, the hose 2 can be inserted into the seat 4 through a first opening in the body 3, until the terminal portion 2a abuts against the annular ridge 3a, while the sleeve 5 is inserted into body 3 through a second opening in body 3, opposite the first opening, and screwed to the hose 2 until the flange 5a abuts against the annular ridge 3a.

The position of the annular ridge 3a in body 3 determines the distance the flexible hose 2 and the sleeve 5 are inserted into the body 3 respectively.

The sleeve 5 also comprises a portion 5c for hydraulic connection to the spray head, said portion projecting outside the annular ridge 3a when the sleeve is inserted into the flexible hose 2.

The projecting portion 5c comprises a seat 5e for a gasket to seal the connection between the spray head and the sleeve 5.

Advantageously, the terminal unit 1 according to the present invention permits the flexible hose 2 to be attached to the sleeve 5 without the need for strip fasteners or similar fixing elements that clamp the exterior of the hose 2 onto the sleeve 5, thus providing the possibility of using flexible hoses 2 with a diameter substantially equal to the diameter of the external flexible sheath 11 that encloses the flexible hose in question.

Advantageously, thanks to the terminal unit according to the invention, the fluid flow rate from the flexible hose 2 to the spray head represents the maximum conveyable flow rate.

As can be seen from the previous description, the body 3 can also comprise two or more separate seats 4 for the insertion of terminal units 2a of two or more different flexible hoses 2, having a predetermined external diameter, conceived for differentiated fluid conveyance to the spray head.

The separate seats 4 have an internal diameter substantially equal to the external diameter of the hoses 2. The two sleeves 5 can be inserted into the terminal portion 2a of the hoses 2, and are equipped with external threading 5f for screwing, with predetermined pressure, into the terminal portion 2a of the hoses 2, so to the hoses 2 against the body 3 from the interior.

The body 3 between the two separate seats 4 has a predetermined thickness h, being thin enough so that the two seats are almost in contact with each other, the thickness h being equal to 4 tenths of a millimetre for example.

The body 3 can also comprise two separate annular ridges 3a configured in the seats 4 to provide abutment between the head 3b and the terminal portion 2a of the hoses 2.

Advantageously, the terminal unit 1, configured in this manner, is able to enclose the flexible hoses 2 inside an external flexible sheath 11 with a minimum interaxial distance between the hoses 2, thus providing the maximum differentiated fluid flow rate.

Advantageously, the separate flexible hoses 2 are fixed by the respective sleeves 5 in pressure from the interior against the body 3.

Advantageously, the terminal unit 1 permits the use of two separate flexible hoses 2 for differentiated fluid conveyance to two distribution chambers in a spray head, thus eliminating reduction in the fluid flow rate to the distribution chambers.

The body 3 also comprises separate additional seats 6 to house the wiring 12 for electrical connection between the spray head and a control unit. In particular, the control unit is used to open and close the electrovalve for fluid cut-off in the respective flexible hoses 2.

Lastly, the terminal unit 1 comprises a support 7, having pass-through holes 7a in the projecting portion 5c of sleeve 5, and quick connect electrical connectors 7b to connect the control unit to the spray head.

In particular, said electric connectors 7b comprise a plug portion 7c, equipped with electrical connections 7d for the electrical connection cables 12, for coupling to the related sockets in the spray heads.

The support 7 is produced from an electrically insulated material and attached to body 3, by means of a system such a snap-on clamp system. Lastly, the terminal unit 1 comprises a ring nut 8 having a substantially tubular shape to enclose said body, and conceived to be screwed to a respective portion of the spray head, and to enclose the sleeves 5, the electric connectors 7b, and the plug portions 7c as well as attaching the spray head to the terminal unit.

The main advantages according to the present invention are listed as follows:
- the terminal unit 1 is able to hydraulically connect the flexible hose 2 to the sleeve 5 compressing the hose 2 onto the body 3 from the interior, eliminating cumbersome strip fasteners or other fixing elements that clamp the hose 2 externally;
- the terminal unit 1 makes it possible to use a flexible hose 2 with a diameter substantially equal to the diameter of the external sheath 11, thus permitting the maximum fluid flow rate;
- the terminal unit 1 allows to fix two or more flexible hoses 2 to the body with a minimum interaxial distance between the two hoses 2, thus permitting the maximum fluid flow rate;
- the two or more flexible hoses are fixed in a quick and simple manner to their respective sleeves 5, by screwing the sleeves 5 to the hoses 2;
- the sleeves 5 are fixed in a safe manner to the hoses 2 because the saw-tooth surface prevents undesirable exit of the sleeves 5 from the hoses 2;
- the body 3 fastens the hoses to the respective sleeves 5, eliminating superfluous space from being occupied inside the terminal unit 1, and therefore not only increasing the section of the individual flexible hoses 2, but also reserving space for the electric connections to the control unit.

## Claims

1. Terminal unit (1) for at least one flexible hose (2) having a predetermined external diameter for fluid conveyance to a spray head, **characterised in that** it comprises a body (3) having at least one seat (4) for the embedded insertion of a terminal portion (2a) of the hose (2), the seat (4) having an internal diameter substantially equal to the external diameter of the hose (2), and at least one sleeve (5) which can be inserted into said terminal portion (2a) of the hose (2), with predetermined pressure, so to press the hose (2) against the body (3) from the interior.

2. Terminal unit (1) according to claim 1, **characterised in that** said sleeve (5) is equipped with external threading (5f) of a predetermined pitch and profile, which can be inserted by screwing into said terminal portion (2a) of said hose (2).

3. Terminal unit (1) according to claim 2, **characterised in that** said profile has a saw-tooth configuration.

4. Terminal unit (1) according to claim 3 **characterised in that** said sleeve (5) comprises a tip portion (5b), for fixing onto said hose (2).

5. Terminal unit (1) according to claim 4, **characterised in that** said saw-tooth profile has the face side directed towards said tip (5b).

6. Terminal unit (1) according to claim 5, **characterised in that** said body (3) comprises an annular ridge (3a) formed in said seat (4) to provide a head abutment (3b) against the terminal portion (2a) of the hose (2).

7. Terminal unit (1) according to claim 6, **characterised in that** said sleeve (5) comprises a flange (5a) in abutment (5d) against said annular ridge (3a).

8. Terminal unit (1) according to claim 7, **characterised in that** said sleeve (5) comprises a portion (5c) projecting out from the annular ridge (3a), for hydraulic connection with the spray head.

9. Terminal unit (1) according to claim 8, **characterised in that** said projecting portion (5c) comprises a seat (5e) for a gasket.

10. Terminal unit (1) according to any one of the previous claims, **characterised in that** said body (3) comprises two separate seats (4) to house a terminal portion (2a) of two flexible hoses (2) having a predetermined external diameter for differentiated fluid conveyance to the spray head, the seats (4) having an internal diameter that is substantially equal to the external diameters of the hoses (2), and two sleeves (5) that can be inserted in said terminal portion (2a) of the hoses (2), so to press the hoses (2) against the body (3) from the interior.

11. Terminal unit (1) according to claim 10 **characterised in that** said body (3) comprises two annular ridges (3a) formed in said seats (4) for head abutment against the terminal portion (2a) of the hoses (2).

12. Terminal unit (1) according to claim 11, **characterised in that** said body (3) comprises additional separate seats (6) to house the electrical connection wiring (12) between the spray head and a control unit of a fluid cut-off electrovalve in the respective flexible hoses (2).

13. Terminal unit (1) according to claim 12, **characterised in that** it comprises a support (7) positioned against the body (3), having pass-through holes (7a) of said projection portion (5c) of the sleeves (5), and **in that** it comprises quick-connect electrical connectors (7b) for the spray head.

14. Terminal unit (1) according to claim 13, **characterised in that** said electrical connectors (7b) comprise a plug portion (7c) for coupling to respective sockets on said spray head, said plug portion (7c) being equipped with electrical attachments (7d) for said electrical connection cables (12).

15. Terminal unit (1) according to claim 14, **characterised in that** said support (7) is fixed to said body (3).

16. Terminal unit (1) according to claim 15, **characterised in that** said support (7) is snapped onto said body (3).

17. Terminal unit (1) according to claim 16, **characterised in that** said support (7) is made from an electrically insulating material.

18. Terminal unit (1) according to claim 17, **characterised in that** it comprises a substantially tubular ring nut (8), that encloses said body (3) and can be screwed to a respective threaded portion of the spray head.

19. Terminal unit (1) according to claim 18, **characterised in that** said ring nut (8) encloses said sleeves (5), said electrical connectors (7b), and said plug portions (5c).
